# EUROPEAN PATENT APPLICATION

(11) **EP 4 011 962 A1**
(43) Date of publication of application: **15.06.2022**
(21) Application number: 20209499.1
(22) Date of filing: 24.11.2020
(51) Int. Cl.: C08L 23/12

(54) **BIOPLASTIC COMPOSITION USING LIVESTOCK COMPOST AND METHOD FOR MANUFACTORING BIOPLASTIC USING THE SAME**

(30) Priority: 27.10.2020 KR 20200140335
(71) Applicant: The Nature Co., Ltd, Chungcheongnam-do 31709 (KR)
(72) Inventor: LEE, Kyung Yong, 31768 Dangjin-si, Chungcheongnam-do (KR)
(74) Representative: Pfenning, Meinig & Partner mbB

(57) **Abstract**

Disclosed is a bioplastic composition using livestock compost and a method for manufacturing bioplastic using the same, the bioplastic composition including: 15-25 wt% of a livestock compost powder obtained from the fermentation of livestock manure, 10-20 wt% of a wood powder, 5-10 wt% of sawdust, 5-10 wt% of sodium polyacrylate, 5-10 wt% of methyl trimethoxy silane, 35-45 wt% of a synthetic resin, 1-5 wt% of a compatibilizer, and 1-5 wt% of a lubricant, wherein the improvement in processability can be achieved by reducing the moisture of a livestock compost powder obtained from the fermentation of livestock manure containing moisture, and the enhancement in mechanical properties can be attained.

## Description

### BACKGROUND OF THE INVENTION

### 1. Field of the invention

The present disclosure relates to a bioplastic composition using livestock compost and a method for manufacturing bioplastic using the same and, more specifically, to a bioplastic composition using livestock compost and a method for manufacturing bioplastic using the same, wherein the improvement in processability can be achieved by reducing the moisture of a livestock compost powder obtained from the fermentation of livestock manure containing moisture, and the enhancement in mechanical properties can be attained.

### 2. Description of the Prior Art

Plastics are polymer materials that have a large molecular weight. Plastics are changed from gas into liquid or solid with the increase of molecular weight. Solid materials have poor liquidity with the increase of molecular weight, but have improved mechanical properties, heat resistance, and the like, and can be used as a material necessary for everyday life, such as metals, wood, ceramics, and rubbers. Plastics are obtained by adding, to such polymer materials, various modifiers, colorants, reinforcing agents, fillers, and others, followed by molding processing. The properties of plastics are determined depending on the chemical structure of synthetic resins, such as PE, PP, and PVC, but even identical resins exhibit different properties according to many factors, and thus the resins can be modified by using such a feature. The properties vary depending on the chemical structure, especially, molecular weight, molecular weight distribution, main chain and side chain states resulting from polymer manufacturing conditions (polymerization conditions), end group/terminal group, bridge, stereoregularity, copolymer composition distribution, and the like. In general, preparing a composition suitable for the purpose of use by adding several types of additives or various types of combining agents, such as a reinforcing agent and a modifier, to polymer raw materials is called compounding, and such a composition is distributed in a pellet form.

With the recent increase in usage of various types of plastics, including films used as food packaging materials, the amount of plastic waste is increasing exponentially. The plastic waste is typically disposed of by landfill, incineration, or recycling. However, the incineration and landfill of the waste of a petroleum-originated plastic product after use thereof results in harmful gases to cause air pollution, and is causative of landfill space shortage and environmental pollution. Therefore, in order to solve such problems, the research and development of eco-friendly plastics enabling carbon reduction is actively conducted by utilizing plant-derived byproducts or natural raw materials employing fermentation techniques.

Korean Patent No. 10-1976562 (15 July 2019) discloses an eco-friendly low-carbon decomposable antibacterial material and a manufacturing method therefor.

The eco-friendly low-carbon decomposable antibacterial material has advantages in that air pollution, soil pollution, and water pollution are resolved through the utilization of livestock manure, but has disadvantages in that processability deteriorates due to much moisture contained in compost resulting from the fermentation of livestock manure and mechanical properties are degraded compared with existing general-purpose plastics.

### Prior Art Document

### Patent Document

(Patent Document 1) KR 10-1976562 B1, 15 June 2019

### SUMMARY OF THE INVENTION

An aspect of the present disclosure is to provide a bioplastic composition using livestock compost and a method for manufacturing bioplastic using the same, wherein the improvement in processability can be achieved by reducing the moisture of a livestock compost powder obtained from the fermentation of livestock manure containing moisture.

Another aspect of the present disclosure is to provide a bioplastic composition using livestock compost and a method for manufacturing bioplastic using the same, wherein the enhancement in mechanical properties can be attained.

In accordance with an aspect of the present disclosure, there is provided a bioplastic composition using livestock compost, the bioplastic composition including: 15-25 wt% of a livestock compost powder obtained from the fermentation of livestock manure, 10-20 wt% of a wood powder, 5-10 wt% of sawdust, 5-10 wt% of sodium polyacrylate, 5-10 wt% of methyl trimethoxy silane, 35-45 wt% of a synthetic resin, 1-5 wt% of a compatibilizer, and 1-5 wt% of a lubricant.

The livestock compost powder obtained from the fermentation of livestock manure may be pulverized to a size of 80-400 mesh; the wood powder may be obtained by smashing waste wood and have a particle size of 1-3 mm; the sawdust may be generated during the sawing of wood and have a particle size of 4-5 mm.

The bioplastic composition may further include, with respect to 100 parts by weight thereof, 0.1-1 parts by weight of nanocellulose.

The bioplastic composition may further include, with respect to 100 parts by weight thereof, 1-5 parts by weight of dimethyl carbonate and 1-5 parts by weight of a corn oil.

In accordance with another aspect of the present disclosure, there is provided a method for manufacturing bioplastic using livestock compost, the method including: feeding, into a fermentation bath, 60-80 wt% of livestock manure, 15-35 wt% of a moisture control agent, and 1-10 wt% of decomposition accelerating microorganisms, followed by fermentation, to prepare livestock compost (Step 1); feeding the livestock compost into a dryer, followed by primary drying (Step 2); pulverizing the primarily dried livestock compost to prepare a livestock compost powder (Step 3); feeding the livestock compost powder into a dryer, followed by secondary drying at 100-250°C for 1-3 hours (Step 4); adding a wood powder, sawdust, and sodium polyacrylate to the secondarily dried livestock compost powder, followed by stirring at 20-30°C for 1-2 hours, to prepare a first mixture (Step 5); adding methyl trimethoxy silane to the first mixture, followed by stirring at 110-120°C for 6-10 hours, to prepare a second mixture (Step 6); and adding a synthetic resin, a compatibilizer, and a lubricant to the second mixture, followed by molding, to manufacture bioplastic (Step 7).

The method may further include, after Step 1, separating the moisture control agent from the livestock compost.

In Step 2, the dryer may continuously stir the livestock compost through inner stirring equipment attached therein, and supply heat to the outside of a stirring drum, provided in the stirring equipment, by using a heat transfer fluid to dry the livestock compost at 100-200°C for 1-3 hours while steam generated during drying is periodically subjected to forced discharge.

According to the present disclosure, the bioplastic composition using livestock compost according to the present disclosure has an advantage in that the enhancement in mechanical properties can be attained.

Furthermore, the method for manufacturing bioplastic using livestock compost according to the present disclosure has an advantage in that the improvement in processability can be achieved by reducing the moisture of a livestock compost powder obtained from the fermentation of livestock manure containing moisture.

### DETAILED DESCRIPTION OF THE EXEMPLARY EMBODIMENTS

Hereinafter, the present disclosure will be described in detail.

Bioplastics are receiving attention as materials to replace petroleum-based raw materials, which are limited resources, and especially, carbon neutral-type biomass is attracting a great interest since such biomass does not increase the total amount of carbon dioxide on the earth.

First, a bioplastic composition using livestock compost according to the present disclosure will be described.

A bioplastic composition using livestock compost according to the present disclosure includes: 15-25 wt% of a livestock compost powder obtained from the fermentation of livestock manure, 10-20 wt% of a wood powder, 5-10 wt% of sawdust, 5-10 wt% of sodium polyacrylate, 5-10 wt% of methyl trimethoxy silane, 35-45 wt% of a synthetic resin, 1-5 wt% of a compatibilizer, and 1-5 wt% of a lubricant.

In the present disclosure, a livestock compost powder obtained from the fermentation of livestock manure, a wood powder, and sawdust are used as biomass.

When the livestock compost powder obtained from the fermentation of livestock manure alone is used as biomass, mechanical properties of the bioplastic may be degraded.

The present disclosure is characterized in that the mechanical properties of the bioplastic are enhanced by using, as biomass, a wood powder and sawdust, together with a livestock compost powder obtained from the fermentation of livestock manure.

The livestock compost powder obtained from the fermentation of livestock manure is preferably pulverized to a size of 80-400 mesh.

The wood powder is obtained by smashing waste wood, and preferably has a particle size of 1-3 mm.

The sawdust is generated during the sawing of wood, and preferably has a particle size of 4-5 mm.

The livestock compost powder obtained from the fermentation of livestock manure is preferably contained in 15-25 wt%. Less than 15 wt% causes a problem in that a too small content of biomass is contained, and more than 25 wt% causes a problem in that mechanical properties of bioplastic are degraded.

The wood powder is preferably contained in 10-20 wt%. Less than 10 wt% causes a problem in that mechanical properties of bioplastic are degraded, and more than 20 wt% causes a problem in that the amount of the synthetic resin contained is decreased.

The sawdust is preferably contained in 5-10 wt%. Less than 5 wt% causes a problem in that mechanical properties of bioplastic are degraded, and more than 10 wt% causes a problem in that the amount of the synthetic resin contained is decreased.

The sodium polyacrylate is contained to remove moisture from the livestock compost powder obtained from the fermentation of livestock manure.

The sodium polyacrylate is preferably contained in 5-10 wt%. Less than 5 wt% causes a problem in that moisture cannot be removed from the livestock compost powder obtained from the fermentation of livestock manure, and more than 10 wt% may generate carbides during product molding.

The methyl trimethoxy silane is contained to increase hydrophobicity of biomass by changing hydrophilicity to hydrophobicity in the biomass.

The methyl trimethoxy silane is preferably contained in 5-10 wt%. Less than 5 wt% causes a problem in that the hydrophobicity of biomass is not sufficiently increased, and more than 10 wt% may generate carbides during product molding.

Examples of the synthetic resin may include: polyolefins, such as polyethylene, ethylene copolymers, polypropylene, propylene copolymers, poly(4-methyl-1-pentene), and copolymers thereof; polyesters, such as polyethylene terephthalate, polybutylene terephthalate, polycarbonate, polyarylate, and copolymers thereof; polyamides (PA), such as nylon and copolymers thereof; polyethers, such as polyacetal, polyphenylene oxide, polysulfone, polyphenylene sulfide, polyetheretherketone, and copolymers thereof; and polyvinyls, such as polyvinyl chloride, polyvinylidene chloride, polyvinyl acetate, polyvinyl alcohol, polyvinyl acetal, polystyrene, polymethyl methacrylate, and copolymers thereof.

The synthetic resin is preferably contained in 35-45 wt%. Less than 35 wt% causes a problem in that dispersibility and compatibility are rapidly degraded, and more than 45 wt% causes a problem in that the content of biomass is decreased.

The compatibilizer is a material that removes release properties between the synthetic resin, which is non-polar, and herbaceous biomass, which is polar, to give compatibility. Examples of the compatibilizer may include glycidyl methacrylate, ethylene vinyl alcohol (EVA), polyvinyl alcohol (PVA), ethylene vinyl acetate, butyl acrylate copolymer (EBA), and the like.

The compatibilizer is preferably contained in 1-5 wt%. Less than 1 wt% may cause delamination between layers due to insufficient compatibility, and more than 5 wt% may generate carbides during product molding.

The lubricant is an ingredient that is added to prevent thermal decomposition by enhancing junction or affinity between a synthetic resin and a combination product containing a biomass powder and reducing frictional heat generated at the time of mixing and extrusion and to perform smooth extrusion. Such a lubricant, even if added, provides smooth workability while maintaining mechanical properties similar to those of basic materials. One or a mixture of two or more selected from the group consisting of a stearic acid salt, a palmitic acid salt, and a lauric acid salt, which are compounds with high environmental friendliness, may be used as the lubricant. More preferably, calcium stearate, zinc stearate, or a mixture thereof may be used.

The lubricant is preferably contained in 1-5 wt%. Less than 1 wt% cannot produce a sufficient effect as a lubricant during product molding, and more than 5 wt% causes a problem in that defects are generated inside a product, or carbides, flow-marks, and the like are generated during product molding, thereby spoiling a beautiful appearance.

The bioplastic composition using livestock manure according to the present disclosure may further contain, with respect to 100 parts by weight thereof, 0.1-1 parts by weight of nanocellulose.

The bioplastic composition using livestock compost can further enhance mechanical strength by containing nanocellulose.

The bioplastic composition using livestock manure according to the present disclosure may further contain, with respect to 100 parts by weight thereof, 1-5 parts by weight of dimethyl carbonate and 1-5 parts by weight of a corn oil.

The bioplastic composition using livestock compost can further increase hydrophobicity of biomass by containing dimethyl carbonate and a corn oil to change hydrophilicity to hydrophobicity in the biomass.

The bioplastic composition using livestock compost according to the present disclosure has an advantage in that the enhancement in mechanical properties can be attained.

Next, a method for preparing bioplastic using livestock compost according to the present disclosure will be described.

A method for manufacturing bioplastic using livestock compost according to the present disclosure includes:
feeding, into a fermentation bath, 60-80 wt% of livestock manure, 15-35 wt% of a moisture control agent, and 1-10 wt% of decomposition accelerating microorganisms, followed by fermentation, to prepare livestock compost (Step 1);
feeding the livestock compost into a dryer, followed by primary drying (Step 2);
pulverizing the primarily dried livestock compost to prepare a livestock compost powder (Step 3);
feeding the livestock compost powder into a dryer, followed by secondary drying at 100-250°C for 1-3 hours (Step 4);
adding a wood powder, sawdust, and sodium polyacrylate to the secondarily dried livestock compost powder, followed by stirring at 20-30°C for 1-2 hours, to prepare a first mixture (Step 5);
adding methyl trimethoxy silane to the first mixture, followed by stirring at 110-120°C for 6-10 hours, to prepare a second mixture (Step 6); and
adding a synthetic resin, a compatibilizer, and a lubricant to the second mixture, followed by molding, to manufacture bioplastic (Step 7).

In step 1, at least one of bovine manure, porcine manure, and chicken manure may be used as the livestock manure.

The moisture control agent is contained for the absorption of moisture from livestock manure. At least one of sawdust or chaff may be used as the moisture control agent.

One or more selected from the group consisting of *Bacillus subtilis,* nitrobacteria, and lactobacillus may be used as the decomposition accelerating microorganisms. The decomposition accelerating microorganisms serve to decompose livestock manure more easily by accelerating the fermentation of the livestock manure mixed with the moisture control agent.

In Step 1, 60-80 wt% of a livestock powder, 15-35 wt% of a moisture control agent, and 1-10 wt% of decomposition accelerating microorganisms are fed into a fermentation bath, and fermented for 30-90 days while stirring is conducted once a day and air is continuously supplied, thereby preparing livestock compost.

The microorganisms are active 5-10 days after the initiation of fermentation, and thus the self-temperature increases to 80°C or higher during the composting process, resulting in the death of all harmful bacteria in the livestock manure.

Upon the completion of the fermentation process, the livestock manure is changed into livestock compost, and thus the odor disappears, the temperature of the livestock compost is maintained at 10-20°C, and the moisture content is reduced to 20-50 wt%.

After Step 1, a step of separating the moisture control agent from the livestock compost may be added.

The moisture control agent separated from the livestock compost may be recycled during a fermentation process.

In Step 2, the livestock compost is fed into a dryer, followed by primary drying at 100-200°C for 1-3 hours.

The dryer has inner stirring equipment attached therein to thereby continuously stir the livestock compost, and supplies heat to the outside of a stirring drum provided in the stirring equipment by using a heat transfer fluid to thereby dry the livestock compost at 100-200°C for 1-3 hours. The steam generated during drying is periodically subjected to forced discharge, thereby preventing agglomeration of livestock compost due to the generation of inner steam and sticking of livestock compost onto inner wall surfaces and the stirring equipment and maximizing drying efficiency.

When the drying temperature is lower than 100°C, drying efficiency may be decreased to cause an increase in drying time, and when the drying temperature is higher than 200°C, the livestock compost may be carbonized.

In Step 3, the primarily dried livestock compost is pulverized to 80-400 mesh by using a pulverizer to prepare a livestock compost powder. Any one of a hammer crusher, a pin crusher, a micro air jet mill, a jet mill, a turbo mill, a fitz mill, or a ball mill may be used as the pulverizer.

In Step 4, the livestock compost powder is fed into a dryer, followed by secondary at 100-250°C for 1-3 hours. Any one of a flow screw dryer, a vacuum dryer, a hot-air dryer, a microwave dryer, a powder dryer, or a freeze dryer may be used as the dryer.

The moisture content of the livestock compost powder after the secondary drying is 1-5 wt%.

In Step 5, 70-80 parts by weight of a wood powder, 35-40 parts by weight of sawdust, and 35-40 parts by weight of sodium polyacrylate are added to 100 parts by weight of the secondarily dried livestock compost powder, followed by stirring at 20-30°C for 1-2 hours, to prepare a first mixture.

The present disclosure has an advantage in that a wood powder and sawdust are added to the livestock compost powder to enhance mechanical strength of bioplastic.

Furthermore, the present disclosure has an advantage in that sodium polyacrylate is added to the livestock compost powder to remove moisture in the livestock compost powder.

In Step 6, 10-20 parts by weight of methyl trimethoxy silane is added to 100 parts by weight of the first mixture, followed by stirring at 110-120°C for 6-10 hours, to prepare a second mixture.

The present disclosure has an advantage in that methyl trimethoxy silane is added to the first mixture to change hydrophilicity to hydrophobicity in biomass, thereby increasing hydrophobicity of the biomass.

In Step 7, 65-75 parts by weight of a synthetic resin, 1-10 parts by weight of a compatibilizer, and 1-10 parts by weight of a lubricant are added to 100 parts by weight of the second mixture, followed by molding, to manufacture a bioplastic.

The method for manufacturing a bioplastic using livestock compost according to the present disclosure has an advantage in that the improvement in processability can be achieved by reducing the moisture of the livestock compost powder obtained from the fermentation of livestock manure containing moisture.

Hereinafter, constitutions and effects of the present disclosure will be described in detail with reference to examples. These examples are intended to only illustrate the present disclosure, and the scope of the present disclosure is not limited to these examples.

### [Example 1]

To a fermentation bath, 75 wt% of livestock manure, 20 wt% of a moisture control agent, and 5 wt% of *Bacillus subtilis* were fed, and fermented for 60 days while stirring is conducted once a day and air is continuously supplied, thereby preparing livestock compost. A mixture of 70 wt% of bovine manure, 10 wt% of porcine manure, and 20 wt% of chicken manure was used as the livestock manure. Sawdust was used as the moisture control agent. The moisture control agent was separated from the livestock compost. The livestock compost with the moisture control agent separated therefrom was fed into a dryer, and primarily dried at 150°C for 2 hours. The dryer has inner stirring equipment attached therein to thereby continuously stir the livestock compost, and supplies heat to the outside of a stirring drum, provided in the stirring equipment, by using a heat transfer fluid. The steam generated during drying is periodically subjected to forced discharge. The primarily dried livestock compost was pulverized to 100 mesh by using a pulverizer to prepare a livestock compost powder. The livestock compost powder was fed into a hot-air dyer, and secondarily dried at 200°C for 1 hour. To 100 parts by weight of the livestock compost powder, 75 parts by weight of a wood powder, 37 parts by weight of sawdust, and 37 parts by weight of sodium polyacrylate were added, followed by stirring at 25°C for 1 hour, to prepare a first mixture. The wood powder was obtained by smashing waste wood to a particle size of 3 mm, and the sawdust used had a particle size of 5. To 100 parts by weight of the first mixture, 15 parts by weight of methyl trimethoxy silane was added, followed by stirring at 110°C for 6 hours, to prepare a second mixture. To 100 parts by weight of the second mixture, 70 parts by weight of a synthetic resin, 5 parts by weight of a compatibilizer (EBA-MA-G, butylacrylate copolymer), and 4 parts by weight of a lubricant (Zn-st, zinc stearate) were added, and the mixture was cut while the mixture was extruded at 160-190°C, thereby manufacturing a bioplastic using livestock compost. As the synthetic resin, polypropylene (PP, B-310, density = 0.9 g/§^{..}, melting point = 0.5 g/10 min) from Lotte Chemical Corporation was used.

### [Example 2]

A bioplastic using livestock compost was manufactured by the same method as in Example 1 except that 5 parts by weight of nanocellulose was further added when 75 parts by weight of a wood powder, 37 parts by weight of sawdust, and 37 parts by weight of sodium polyacrylate were added to 100 parts by weight of the livestock compost powder, and 10 parts by weight of dimethyl carbonate and 10 parts by weight of a corn oil were further added when 15 parts by weight of methyl trimethoxy silane was added to 100 parts by weight of the first mixture.

### [Comparative Example 1]

A bioplastic using livestock compost was manufactured by the same method as in Example 1 except that, instead of preparing a first mixture by adding 75 parts by weight of a wood powder, 37 parts by weight of sawdust, and 37 parts by weight of sodium polyacrylate to 100 parts by weight of the livestock compost powder and conducting stirring at 25°C for 1 hour, a first mixture was prepared by adding 75 parts by weight of a wood powder and 37 parts by weight of sodium polyacrylate to 100 parts by weight of the livestock compost powder and conducting stirring at 25°C for 1 hour.

### [Comparative Example 2]

A bioplastic using livestock compost was manufactured by the same method as in Example 1 except that, instead of preparing a first mixture by adding 75 parts by weight of a wood powder, 37 parts by weight of sawdust, and 37 parts by weight of sodium polyacrylate to 100 parts by weight of the livestock compost powder and conducting stirring at 25°C for 1 hour, a first mixture was prepared by adding 37 parts by weight of sawdust and 37 parts by weight of sodium polyacrylate to 100 parts by weight of the livestock compost powder and conducting stirring at 25°C for 1 hour.

### [Comparative Example 3]

A bioplastic using livestock compost was manufactured by the same method as in Example 1 except that, instead of preparing a first mixture by adding 75 parts by weight of a wood powder, 37 parts by weight of sawdust, and 37 parts by weight of sodium polyacrylate to 100 parts by weight of the livestock compost powder and conducting stirring at 25°C for 1 hour, a first mixture was prepared by adding 75 parts by weight of a wood powder and 37 parts by weight of sawdust to 100 parts by weight of the livestock compost powder and conducting stirring at 25°C for 1 hour.

### [Comparative Example 4]

A compost mixture was prepared by mixing 70 wt% of livestock manure, 15 wt% of sawdust, 14.3 wt% of a microorganism medium, and 0.7 wt% of microorganisms for compost decomposition. A mixture of 70 wt% of bovine manure, 10 wt% of porcine manure, and 20 wt% of chicken manure was used as the livestock manure. A mushroom medium was used as the microorganism medium. Lactic acid bacteria were used as the microorganism for compost decomposition. The compost mixture was fermented for 2 months with stirring while air was injected, thereby preparing a compost fermented product. The compost fermented product was matured for 2 months to prepare a compost matured product. The compost matured product was dried to prepare a compost dried product. The compost dried product was pulverized to 80 mesh to prepare compost particles. 40 wt% of the compost particles, 40 wt% of a synthetic resin, 5 wt% of an antibiotic agent, 2 wt% of a binder, 10 wt% of a dispersant, 1 wt% of a slip agent, 1 wt% of an acrylic powder, and 1 wt% of oil were mixed at a temperature of 80°C for 30 minutes, and the mixture was cut while the mixture was extruded at 160-190°C, thereby manufacturing a bioplastic using livestock compost. As the synthetic resin, polypropylene (PP, B-310, density = 0.9 g/cm³, melting point = 0.5 g/10 min) from Lotte Chemical Corporation was used. As the antibiotic agent, pozzolan was used. As the binder, anhydrous maleic acid was used. As the dispersant, a dolomite powder was used. As the slip agent, an amide-based slip agent was used. As the oil, liquid paraffin was used.

### [Comparative Example 5]

After 90 wt% of a synthetic resin, 9 wt% of a dispersant, and 1 wt% of a slipping agent were combined for 30 minutes, the mixture was cut while it was extruded at 160-190°C, thereby manufacturing a general-purpose plastic. As the synthetic resin, polypropylene (PP, B-310, density = 0.9 g/cm³, melting point = 0.5 g/10 min) from Lotte Chemical Corporation was used. As the dispersant, a dolomite powder was used. As the slip agent, an amide-based slip agent was used.

### [Test Example 1]

Each of the bioplastics using livestock compost manufactured in Examples 1 and 2 and Comparative Examples 1 to 4 and the general-purpose plastic manufactured in Comparative Example 5 was extrusion-molded into specimens supposed in tensile property and impact strength measurement methods, and then the specimens were measured for properties by methods presented in the following measurement methods.

In the tensile strength measurement method, on the basis of standard test method for tensile properties of plastics (ASTM D638), a dumbbell-shaped test specimen was made, and a universal strength tester was used to apply a load (N) in a tensile direction until the specimen was broken, thereby measuring tensile strength. The tensile strength (MPa) of the measured specimen was calculated by dividing the value of the maximum load (N) by the cross-sectional area (m²) of the initial specimen.

In the impact strength measurement method, on the basis of standard test method for tensile properties of plastics (ASTM D 256), a notch-shaped test specimen was made, and an Izod impactor was used to measure the impact strength value.

In the flexural strength and flexural modulus measurement methods, on the basis of standard test method for tensile properties of plastics (ASTM D 790), the flexural strength and the flexural modulus were measured.

The property measurement result values are shown in Table 1 below.

**TABLE 1**

| | Extrusion workability | Tensile strength (MPa) | Flextural stregth (MPa) | Flexural modulus (MPa) | Impact strength (J/m) |
|---|---|---|---|---|---|
| Example 1 | Good | 27 | 34 | 2994 | 65 |
| Example 2 | Good | 29 | 38 | 3003 | 69 |
| Comparative Example 1 | Good | 22 | 28 | 2567 | 51 |
| Comparative Example 2 | Good | 16 | 25 | 2411 | 43 |
| Comparative Example 3 | Poor | 23 | 29 | 2613 | 53 |
| Comparative Example 4 | Poor | 12 | 22 | 2214 | 32 |
| Comparative Example 5 | Good | 27 | 35 | 2997 | 66 |

It can be verified from Table 1 that the bioplastics using livestock compost manufactured in Examples 1 and 2 showed excellent tensile strength, flexural strength, and flexural modulus compared with the bioplastics using livestock compost manufactured in Comparative Examples 1 to 4.

It can also be verified that the bioplastics using livestock compost of Comparative Examples 3 and 4 showed poor extrusion workability due to the moisture contained in the livestock manure.

It can also be verified that the bioplastics using livestock manure manufactured in Examples 1 and 2 showed similar degrees of tensile strength, flexural strength, and flexural modulus compared with the general-purpose plastic manufactured in Comparative Example 5.

## Claims

1. A bioplastic composition using livestock compost, the bioplastic composition comprising:
15-25 wt% of a livestock compost powder obtained from the fermentation of livestock manure, 10-20 wt% of a wood powder, 5-10 wt% of sawdust, 5-10 wt% of sodium polyacrylate, 5-10 wt% of methyl trimethoxy silane, 35-45 wt% of a synthetic resin, 1-5 wt% of a compatibilizer, and 1-5 wt% of a lubricant.

2. The bioplastic composition of claim 1, wherein the livestock compost powder obtained from the fermentation of livestock manure is pulverized to a size of 80-400 mesh,
wherein the wood powder is obtained by smashing waste wood and has a particle size of 1-3 mm, and
wherein the sawdust is generated during the sawing of wood and has a particle size of 4-5 mm.

3. The bioplastic composition of any of claims 1 or 2, further comprising, with respect to 100 parts by weight thereof, 0.1-1 parts by weight of nanocellulose.

4. The bioplastic composition of any of claims 1 to 3, further comprising, with respect to 100 parts by weight thereof, 1-5 parts by weight of dimethyl carbonate and 1-5 parts by weight of a corn oil.

5. A method for manufacturing bioplastic using livestock compost, the method comprising:
feeding, into a fermentation bath, 60-80 wt% of livestock manure, 15-35 wt% of a moisture control agent, and 1-10 wt% of decomposition accelerating microorganisms, followed by fermentation, to prepare livestock compost (Step 1);
feeding the livestock compost into a dryer, followed by primary drying (Step 2);
pulverizing the primarily dried livestock compost to prepare a livestock compost powder (Step 3);
feeding the livestock compost powder into a dryer, followed by secondary drying at 100-250°C for 1-3 hours (Step 4);
adding a wood powder, sawdust, and sodium polyacrylate to the secondarily dried livestock compost powder, followed by stirring at 20-30°C for 1-2 hours, to prepare a first mixture (Step 5);
adding methyl trimethoxy silane to the first mixture, followed by stirring at 110-120°C for 6-10 hours, to prepare a second mixture (Step 6); and
adding a synthetic resin, a compatibilizer, and a lubricant to the second mixture, followed by molding, to manufacture bioplastic (Step 7).

6. The method of claim 5, further comprising, after Step 1, separating the moisture control agent from the livestock compost.

7. The method of any of claims 5 or 6, wherein in Step 2, the dryer continuously stir the livestock compost through inner stirring equipment attached therein, and supplies heat to the outside of a stirring drum, provided in the stirring equipment, by using a heat transfer fluid to dry the livestock compost at 100-200°C for 1-3 hours while steam generated during drying is periodically subjected to forced discharge.
